# EUROPÄISCHE PATENTANMELDUNG

(11) **EP 4 311 617 A1**
(43) Veröffentlichungstag der Anmeldung: **31.01.2024**
(21) Anmeldenummer: 22187853.1
(22) Anmeldetag: 29.07.2022
(51) Int. Cl.: B23D 59/00, B23D 49/16, B27B 9/02, B27B 9/04

(54) **HANDGEFÜHRTE BEARBEITUNGSMASCHINE**

(71) Anmelder: Festool GmbH, 73240 Wendlingen am Neckar (DE)
(72) Erfinder: KUNZE, José Gabriel, 72074 Tübingen (DE); ENDER, Dominic, 72622 Reudern (DE); SCHLEIFENBAUM, Charlotte, 73098 Rechberghausen (DE)
(74) Vertreter: Herrmann, Jochen

(57) **Zusammenfassung**

Die Erfindung betrifft eine handgeführte Bearbeitungsmaschine (10), insbesondere Handkreissäge oder Stichsäge, mit einer Führungsplatte (11), die eine Auflageseite (12) zur mittelbaren oder unmittelbaren Auflage auf einem zu bearbeitenden Werkstück (80) aufweist und gegenüberliegend der Auflageseite (12) eine Oberseite (13) aufweist, wobei im Bereich oberhalb der Oberseite (13) eine Antriebsbaugruppe (20) mit einem Antriebsmotor (21) gehalten ist, mittels dem ein Schneidwerkzeug (30) antreibbar ist, wobei das Schneidwerkzeug (30) in einer arretierten Schneidposition, in der die Antriebsbaugruppe (20) gegenüber der Führungsplatte (11) ortsfest positioniert, insbesondere verriegelt, ist, über die Auflageseite (12) unterseitig vorsteht, wobei dem Schneidwerkzeug (30) eine Beleuchtungsanordnung (40, 40') zugeordnet ist, die einen Lichtkegel (41) in Arbeitsrichtung (AR) der Bearbeitungsmaschine (10), auf das Schneidwerkzeug (30) emittiert. Um die Ausrichtung der Bearbeitungsmaschine gegenüber einem Werkstück zu erleichtern, ist es erfindungsgemäß vorgesehen, dass das Schneidwerkzeug (30) in der arretierten Schneidposition im Lichtweg des Lichtkegels (41, 41') angeordnet ist, um einen Schlagschatten (70) des Schneidwerkzeugs (30) auf einer dem Schneidwerkzeug (30) zugewandten, quer zur Auflageseite (12) der Führungsplatte (11) ausgerichteten Stirnseite (81) eines zu bearbeitenden Werkstücks (80) zu erzeugen.

## Beschreibung

Die Erfindung betrifft eine handgeführte Bearbeitungsmaschine, insbesondere eine Handkreissäge oder eine Stichsäge, mit einer Führungsplatte, die eine Auflageseite zur mittelbaren oder unmittelbaren Auflage auf einem zu bearbeitenden Werkstück aufweist und gegenüberliegend der Auflageseite eine Oberseite aufweist, wobei im Bereich oberhalb der Oberseite eine Antriebsbaugruppe mit einem Antriebsmotor gehalten ist, mittels dem ein Schneidwerkzeug, insbesondere ein Sägeblatt, antreibbar ist, wobei das Schneidwerkzeug in einer arretierten Schneidposition, in der die Antriebsbaugruppe gegenüber der Führungsplatte ortsfest positioniert, insbesondere verriegelt, ist, über die Auflageseite unterseitig vorsteht, wobei dem Schneidwerkzeug eine Beleuchtungsanordnung zugeordnet ist, die einen Lichtkegel in Arbeitsrichtung der Bearbeitungsmaschine, auf das Schneidwerkzeug emittiert, um einen Schlagschatten des Schneidwerkzeugs auf dem Werkstück zu erzeugen.

JP 2022-46093 A offenbart eine Tauchsäge, die dazu dient einen Tauchschnitt in die Oberseite eines zu bearbeitenden Werkstückes einzubringen. Zu diesem Zweck wird die Tauchsäge mit ihrer Führungsplatte auf die Oberseite des Werkstücks aufgesetzt. Anschließend wird eine Antriebsbaugruppe der Tauchsäge gegenüber der Führungsplatte manuell von einer Parkstellung in eine Tauchstellung verschwenkt. Bei dieser Schwenkbewegung schneidet das Sägeblatt der Antriebsbaugruppe in die Oberseite des Werkstücks ein. In der Tauchstellung befindet sich die Antriebsbaugruppe in ihrer Schneidposition, wobei die Antriebsbaugruppe an einem Anschlag der Führungsplatte anliegt. Anschließend kann die Tauchsäge linear gegenüber dem Werkstück verschoben werden, um einen Linearschnitt im Werkstück zu erzeugen. Für eine exakte Ausrichtung der Antriebsbaugruppe, insbesondere des Sägeblatts, gegenüber dem Werkstück ist ein optischer Schnitt-Anzeiger vorgesehen. Hierzu besitzt die Antriebsbaugruppe eine Beleuchtungsanordnung, die sich in der Parkposition in Arbeitsrichtung hinter dem Sägeblatt befindet. Die Beleuchtungsanordnung erzeugt zu beiden Seiten des Sägeblatts jeweils einen Lichtkegel. Diese werden seitlich an dem Sägeblatt vorbei in Richtung auf das zu bearbeitende Werkstück geführt. Auf diese Weise wird ein Schlagschatten des Sägeblatts auf die Oberseite des Werkstücks projiziert. Der Schlagschatten zeigt die Stelle an, in die das Sägeblatt eintauchen wird, wenn es von der Parkstellung in die Tauchstellung verschwenkt wird.

Bei handgeführten Bearbeitungsmaschinen, beispielsweise bei handgeführten Kreissägen, auch als Handkreissäge bezeichnet, ist es häufig gefordert, einen Gehrungsschnitt, in ein Werkstück einzubringen. Hierzu kann ein mit einer Schmiege abgenommener Gehrungswinkel auf die Stirnseite des Werkstücks aufgezeichnet werden. Anschließend wird die Handkreissäge vor die Stirnseite des Werkstücks gesetzt und die Gehrungsstellung der Handkreissäge eingestellt. Hierzu wird von hinten über das Sägeblatt der Handkreissäge gepeilt und die Handkreissäge auf die stirnseitig aufgezeichnete Markierung ausgerichtet. Dann wird die Handkreissäge in der manuell eingestellten Stellung fixiert, um die arretierte Schnittposition zu erhalten. Anschließend kann der Schnitt in das Werkstück eingebracht werden. Diese Vorgehensweise ist aufwendig und der gewünschte Winkel lässt sich nicht immer exakt einstellen.

Es ist Aufgabe der Erfindung, die Ausrichtung einer handgeführten Bearbeitungsmaschine, insbesondere für einen Gehrungsschnitt, gegenüber einem Werkstück zu erleichtern, um einen exakten Trennschnitt in das Werkstück einbringen zu können.

Diese Aufgabe wird dadurch gelöst, dass das Schneidwerkzeug in der arretierten Schneidposition im Lichtweg des Lichtkegels angeordnet ist, um einen Schlagschatten des Schneidwerkzeugs auf einer dem Schneidwerkzeug zugewandten, quer zur Führungsplatte ausgerichteten Stirnseite eines zu bearbeitenden Werkstücks zu erzeugen.

Unter einer eingestellten Schneidposition soll im Rahmen der Erfindung eine Positionierung verstanden werden, bei der das Schneidwerkzeug in einer Schneidstellung steht, wobei das Schneidwerkzeug über die Auflageseite unterseitig vorsteht oder eine von der Auflageseite gebildete Ebene durchdringt. Dabei ist die Schneidposition eingestellt und arretiert, so dass das Schneidwerkzeug gegenüber der Führungsplatte unverschwenkbar gehalten ist.

Erfindungsgemäß kann mithin die Bearbeitungsmaschine in die gewünschte Schneidposition gebracht werden. Dies ist einfach möglich, da der erzeugte Schlagschatten mit einer Verstellung der Bearbeitungsmaschine exakt auf eine Markierung auf der Stirnseite des Werkstücks ausgerichtet werden kann. In der ausgerichteten Stellung kann die Schneidposition arretiert werden, so dass das Schneidwerkzeug in seiner gewünschten Betriebsposition steht, in der unmittelbar anschließend auch der Trennschnitt, insbesondere ein Gehrungsschnitt, exakt erzeugt werden kann.

Der Schlagschatten markiert somit den Bereich auf der Stirnseite des Werkstücks, der von einer von dem Schneidwerkzeug gebildeten Schnittebene geschnitten wird. Die Schnittebene ist die Ebene, die von dem Schneidwerkzeug und der Arbeitsrichtung aufgespannt wird.

Gemäß einer bevorzugten Ausgestaltung der Erfindung kann es vorgesehen sein, dass das Schneidwerkzeug in der arretierten Schneidposition durch eine von der Auflageseite gebildete Auflageebene hindurchgeführt ist, wobei die in Arbeitsrichtung vordere Schneidkante des Sägeblatts die Auflageebene an einer Schnittstelle schneidet, und dass zwischen der Schnittstelle und der Beleuchtungseinrichtung in der arretierten Schneidposition eine geradlinige Sichtverbindung gebildet ist. In anderen Worten wird eine Sichtlinie entlang des Schneidwerkzeugs gebildet, derart dass ein nur durch das Sägeblatt hervorgerufener, im Wesentlichen der Sägeblattdicke entsprechender, Schlagschatten entsteht. Auf diese Weise ist gewährleistet, dass ein Schlagschatten erzeugt werden kann, der sich auf dem Werkstück, insbesondere auf der Stirnseite des Werkstücks, bis nahezu oder bis unmittelbar an die Auflageseite erstreckt. Dies verbessert das Einstellergebnis, insbesondere für einen Gehrungsschnitt, erheblich.

Das Schneidwerkzeug kann in seiner arretierten Schneidposition für den Einstellvorgang an dem Bereich, an welchem es durch die Auflageebene hindurchtritt, vor die Stirnseite des Werkstücks gesetzt, vorzugsweise an diese angelehnt, werden. Dann kann in dieser Stellung der Schlagschatten konturscharf auf der Stirnseite des Werkstücks erzeugt und die Bearbeitungsmaschine einfach und exakt auf eine Markierung auf dem Werkstück ausgerichtet werden.

Die Schnittstelle ist die Stelle, an der das Schneidwerkzeug zuerst in das Werkstück eindringen wird, wenn es bestimmungsgemäß in Arbeitsrichtung vorgeschoben wird. Unter dem Begriff "Schnittstelle" soll im Rahmen der Erfindung der Bereich des Schneidwerkzeugs verstanden werden, der den eigentlichen Sägeschnitt erzeugt. Der Bereich der Schnittstelle erstreckt sich im Rahmen der Erfindung über die schnitterzeugende Breite des Schneidwerkzeugs.

Die geradlinige Sichtverbindung kann sich beispielsweise als Gerade zwischen einem Punkt der Schnittstelle und einem Leuchtmittel der Beleuchtungseinrichtung unmittelbar ergeben. Denkbar ist, dass sich die geradlinige Verbindung auch zwischen einem Punkt der Schnittstelle und einem Umlenkmittel ergibt, welches das Licht des Leuchtmittels in Richtung auf die Schnittstelle umlenkt, um den Lichtkegel zu erzeugen. Beispielsweise kann das Umlenkmittel ein Spiegel sein.

Im Rahmen der Erfindung kann sich ein Lichtkegel entlang einer Seite des Schneidwerkzeugs erstrecken. Bevorzugt ist jedoch eine Lösung, bei der sich Lichtkegel in der arretierten Schneidposition zu beiden Seiten des Schneidwerkzeugs erstrecken. Auf diese Weise lässt sich ein linienförmiger Schlagschatten auf dem Werkstück erzeugen, der leicht auf eine auf dem Werkstück aufgezeichnete Linie ausgerichtet werden kann. Zu diesem Zweck kann es insbesondere auch vorgesehen sein, dass sich die geradlinige Sichtverbindung über die in Arbeitsrichtung verlaufende Seite des Schneidwerkzeugs, erstreckt oder dass sich jeweils eine Sichtverbindung über die beiden in Arbeitsrichtung verlaufenden Seiten des Schneidwerkzeugs erstreckt.

Eine mögliche Erfindungsvariante ist dergestalt, dass die Führungsplatte einen Durchbruch aufweist, durch den zumindest ein Teil des Lichtkegels von der Oberseite zur Auflageseite der Führungsplatte geleitet ist. Es kann dann vorzugsweise auch so sein, dass der Lichtkegel so in den Bereich unterhalb der Auflageseite geführt ist, dass der Schlagschatten des Schneidwerkzeugs in der arretierten Schneidposition bis hin zu der Auflageseite geführt ist oder dass der Abstand des Schlagschattens von der Auflageseite maximal 20% der maximalen Schnitttiefe, vorzugsweise maximal 10% der maximalen Schnitttiefe, der Bearbeitungsmaschine beträgt. Diese Erfindungsgestaltung ermöglicht es den Schlagschatten auf der Stirnseite des Werkstücks derart zu erzeugen, dass er bis an die Auflageseite oder bis nahe an diese herangeführt wird. Dies ist insbesondere bei der Bearbeitung von Werkstücken mit geringer Dicke, also mit geringer Erstreckung quer (senkrecht) zur Auflageseite von Vorteil. Die maximale Schnitttiefe entspricht dem maximal möglichen Überstand des Schneidwerkzeugs über die Auflageseite, den die Bearbeitungsmaschine ermöglicht.

In Weiterbildung der Erfindung kann es auch vorgesehen sein, dass das Schneidwerkzeug in der arretierten Schnittposition im Lichtweg eines/des Lichtkegels angeordnet ist, um einen in Arbeitsrichtung verlaufenden Schnittverlaufschatten des Schneidwerkzeugs auf eine in Arbeitsrichtung verlaufende Oberseite des Werkstücks, auch als Werkstück-Oberseite bezeichnet, zu projizieren. Dem Benutzer wird dann zusätzlich zu der Markierung auf der Stirnseite auch noch mittels des Schnittverlaufschattens angezeigt, wie der Schnitt in der Werkstück-Oberseite verlaufen wird. Dies verbessert die Genauigkeit der Maschinenausrichtung zusätzlich.

Zu diesem Zweck kann es zusätzlich oder alternativ vorgesehen sein, dass eine weitere Beleuchtungsanordnung im Bereich oberhalb der Oberseite der Führungsplatte angeordnet ist, dass die weitere Beleuchtungsanordnung ausgebildet und angeordnet ist, um einen Schnittverlaufschatten des Schneidwerkzeugs auf eine in Arbeitsrichtung verlaufende Werkstück-Oberseite zu projizieren.

Eine Erfindungsvariante kann dergestalt sein, dass das Schneidwerkzeug das Sägeblatt einer Handkreissäge ist, das mittels eines Befestigungselements, insbesondere mittels eines Befestigungsflansches (einseitig oder beidseitig), zentrisch mit der Antriebsbaugruppe verbunden ist, und dass der oder die Lichtkegel der Beleuchtungsanordnung in der arretierten Schnittposition im Verlaufsbereich oberhalb der Führungsplatte zumindest zum größten Teil in einem Bereich verläuft, der zwischen der Oberseite der Führungsplatte und dem Befestigungselement gebildet ist, um einen Schlagschatten auf die Stirnseite des Werkstücks zu werfen. Dann wird verhindert, dass das Befestigungselement die Erzeugung des Schlagschattens auf der Werkstück-Stirnseite beeinflusst und vorzugsweise ermöglicht, dass sich das Sägeblatt linienförmig auf der Stirnseite des Werkstücks als Schlagschatten abzeichnet.

Im Rahmen der Erfindung ist die arretierte Schnittposition vorzugsweise die Einstellposition, bei der das Schneidwerkzeug mit seiner maximalen Schnitttiefe über die Auflageseite der Führungsplatte vorsteht.

Denkbar ist jedoch auch, dass mit der Bearbeitungsmaschine auch zusätzlich zu der arretierten Schnittposition mit maximaler Schnitttiefe eine oder mehrere weitere arretierte Schnittpositionen einstellbar sind, in denen das Schneidwerkzeug mit einer Schnitttiefe über die Auflageseite der Führungsplatte vorsteht, die kleiner ist als die maximale Schnitttiefe.

Vorzugsweise kann es dann auch vorgesehen sein, dass in zumindest einer der weiteren arretierten Schnittpositionen das Schneidwerkzeug im Lichtweg des Lichtkegels angeordnet ist, um einen Schlagschatten des Schneidwerkzeugs auf einer dem Schneidwerkzeug zugewandten, quer zur Auflageseite der Führungsplatte ausgerichteten Stirnseite des zu bearbeitenden Werkstücks zu erzeugen.

Eine erfindungsgemäße Bearbeitungsmaschine kann dergestalt sein, dass die Antriebsbaugruppe mittels eines Gehrungslagers schwenkbar mit der Führungsplatte verbunden ist, dass das Gehrungslager ein Lagerstück und damit schwenkbar verbunden ein Schwenkstück aufweist, dass das Lagerstück an der Führungsplatte und das Schwenkstück an der Antriebsbaugruppe angekoppelt ist, und dass die Beleuchtungsanordnung an dem Schwenkstück mittelbar oder unmittelbar befestigt ist. Hierdurch ergibt sich eine platzsparende Bauweise und die Beleuchtungseinrichtung kann dem Schneidwerkzeug, zum Zwecke der Erzeugung eines konturscharfen Schlagschattens, dicht zugeordnet werden.

Vorzugsweise ist die Beleuchtungsanordnung im Rahmen der Erfindung außerhalb des Bereichs eines Spankanals und/oder in Arbeitsrichtung hinter der oberen Haube gehalten, der zur geordneten Spanabführung dient.

Vorzugsweise ist die Beleuchtungsanordnung im Rahmen der Erfindung in Arbeitsrichtung hinter der oberen Haube und/oder in zumindest einer arretierten Schneidposition unterhalb der Antriebswelle angeordnet.

Besonders bevorzugt sind einzelne Leuchtelemente der Beleuchtungsanordnung in der und/oder mittig zur Schnittebene des Schneidwerkzeugs angeordnet,

Wenn die Bearbeitungsmaschine als Handkreissäge mit einem Sägeblatt ausgebildet ist, dann kann es so sein, dass dem Sägeblatt eine zwischen einer Schutzstellung und einer Freigabestellung verstellbare Schutzabdeckung (beispielsweise eine Pendelhaube) zugeordnet ist, die in der Schutzstellung das Sägeblatt im Bereich der Auflageseite zumindest teilweise abdeckt, und dass die Schutzabdeckung einen Durchbruch aufweist, durch den das Licht der Beleuchtungsanordnung in der Schutzstellung zumindest teilweise hindurchgeführt ist, um den oder die Lichtkegel zu einer oder zu beiden Seiten des Sägeblatts zu erzeugen. Bei dieser Ausführung kann der Schlagschatten auch bei geschlossener Schutzabdeckung erzeugt werden. Dies verbessert die Arbeitssicherheit.

Im Rahmen der Erfindung kann es so sein, dass die Führungsplatte unmittelbar auf die Oberseite des Werkstücks aufgesetzt wird. In einer Variante kann es auch so sein, dass im Bereich der Auflageseite der Führungsplatte eine oder mehrere in Arbeitsrichtung verlaufende Führungsaufnahmen vorgesehen sind, dass die Auflageseite der Führungsplatte auf einer Auflagefläche einer Führungsschiene aufsitzt, wobei Führungen der Führungsschiene mit der oder den Führungsaufnahmen zur Bildung einer Längsführung zusammenarbeiten, dass die Führungsschiene gegenüberliegend der Auflagefläche eine Unterseite aufweist, die zur Auflage auf der Oberseite eines Werkstücks hergerichtet ist, und dass der oder die Lichtkegel zumindest teilweise an der Führungsschiene vorbei oder durch diese hindurch geführt ist/sind, um den Schlagschatten auf dem Werkstück erzeugen.

Die Aufgabe der Erfindung wird auch gelöst mit einem Verfahren zur Trennung eines Werkstücks mittels einer handgeführten Bearbeitungsmaschine, wobei die handgeführte Bearbeitungsmaschine eine Führungsplatte aufweist, die eine Auflageseite zur mittelbaren oder unmittelbaren Auflage auf dem zu bearbeitenden Werkstück aufweist und gegenüberliegend der Auflageseite eine Oberseite aufweist, wobei im Bereich oberhalb der Oberseite eine Antriebsbaugruppe mit einem Antriebsmotor gehalten ist, mittels dem das Schneidwerkzeug antreibbar ist, wobei das Schneidwerkzeug in eine arretierte Schneidposition gebracht wird, in der die Antriebsbaugruppe gegenüber der Führungsplatte ortsfest positioniert, insbesondere verriegelt, ist und das Schneidwerkzeug über die Auflageseite unterseitig vorsteht, wobei dem Schneidwerkzeug eine Beleuchtungsanordnung zugeordnet ist, die einen Lichtkegel in Arbeitsrichtung der Bearbeitungsmaschine, auf das Schneidwerkzeug emittiert. Um die Ausrichtung einer handgeführten Bearbeitungsmaschine gegenüber dem Werkstück zu erleichtern und um einen exakten Trennschnitt in die Stirnseite eines Werkstücks einbringen zu können, ist es dabei vorgesehen, dass das Schneidwerkzeug in der arretierten Schneidposition im Lichtweg des Lichtkegels angeordnet ist, derart, dass ein Schlagschatten des Schneidwerkzeugs auf einer dem Schneidwerkzeug zugewandten Stirnseite des zu bearbeitenden Werkstücks erzeugt wird, und dass dann mit dem Schneidwerkzeug ein Trennschnitt in dem zu bearbeitenden Werkstück vorgenommen wird.

Die Erfindung wird im Folgenden anhand von in den Zeichnungen dargestellten Ausführungsbeispielen näher erläutert. Es zeigen:
Figur 1 in schematischer Darstellung und in Seitenansicht eine handgeführte Bearbeitungsmaschine in Zuordnung zu einem Werkstück,
Figuren 2 bis 6 isolierte Detaildarstellungen der handgeführten Bearbeitungsmaschine gemäß Figur 1 in unterschiedlichen Bearbeitungspositionen,
Figur 7 in perspektivischer Detaildarstellung von schräg vorne eine erfindungsgemäße Bearbeitungsmaschine,
Figur 8 die Bearbeitungsmaschine gemäß Figur 7 in verkleinerter Darstellung und auf einer Führungsschiene aufgesetzt,
Figur 9 in perspektivischer Detaildarstellung von schräg hinten die erfindungsgemäße Bearbeitungsmaschine gemäß Figur 8,
Figur 10 die Bearbeitungsmaschine gemäß den Figuren 8 und 9 in Ansicht schräg von unten entgegengesetzt zur Arbeitsrichtung,
Figur 11 eine alternative Ausführungsform einer Bearbeitungsmaschine in Form einer handgeführten Stichsäge in Seitenansicht und
Figuren 12 und 13 isolierte Detaildarstellungen der Bearbeitungsmaschine gemäß Figur 11 in verschiedenen Arbeitssituationen.

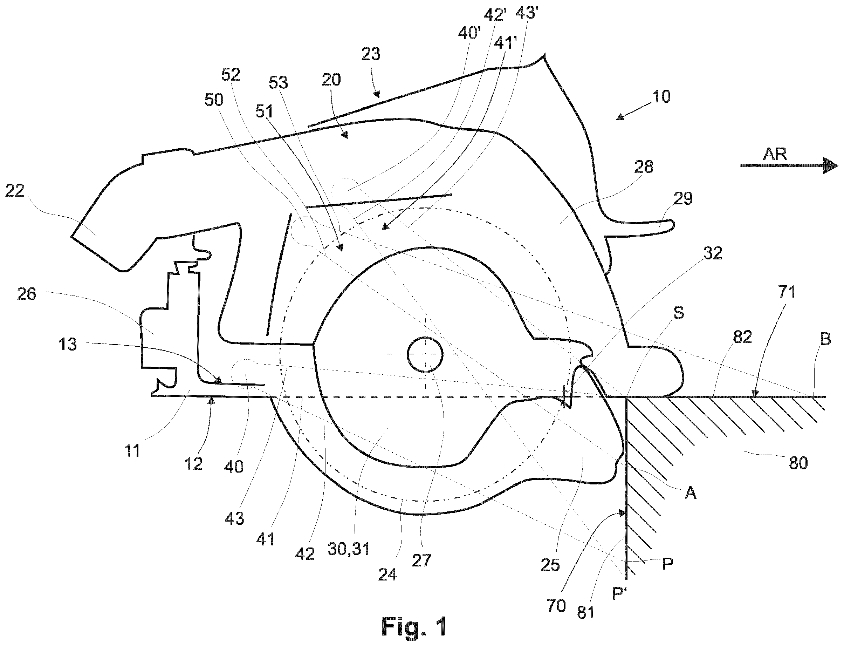

Figur 1 zeigt eine handgeführte Bearbeitungsmaschine 10, nämlich eine Handkreissäge in Seitenansicht. Die Handkreissäge weist in üblicher Bauweise eine Führungsplatte 11 auf, die dazu dient auf einer Oberseite 82 eines Werkstücks 80 aufgelegt und an dieser entlang geführt zu werden, um einen Schnitt in das Werkstück 80 einzubringen, insbesondere ein Trennschnitt.

Die Führungsplatte 11 bildet eine unterseitige Auflageseite 12, die entlang der Oberseite 82 des Werkstücks 80 vorgeschoben werden kann.

Im Bereich oberhalb einer Oberseite 13 der Führungsplatte 11 ist eine Antriebsbaugruppe 20 angeordnet. Die Antriebsbaugruppe 20 weist einen Antriebsmotor 21 auf, der zum Antrieb eines Schneidwerkzeugs 30 dient, das im vorliegenden Ausführungsbeispiel als Sägeblatt 31 (Kreissägeblatt) ausgebildet ist.

Zur Befestigung des Schneidwerkzeugs 30 weist die Antriebsbaugruppe 20 eine Antriebswelle auf, die einen Anlageflansch für das Schneidwerkzeug 30 bildet. Auf diesem Anlageflansch liegt das Schneidwerkzeug 30 mit einer inneren, der Antriebsbaugruppe 20 zugewandten, Seite auf. Auf der gegenüberliegenden äußeren Seite des Schneidwerkzeugs 30 ist ein Befestigungselement 27, insbesondere ein Spannflansch, aufgelegt, der mit der Antriebswelle verschraubt ist, um das Schneidwerkzeug 30 zwischen dem Anlageflansch und dem Befestigungselement 27 einzuspannen.

Wie Figur 1 weiter veranschaulicht, weist die Antriebsbaugruppe 20 eine obere Haube 28 auf, die das Sägeblatt 31 im Bereich oberhalb der Oberseite 13 der Führungsplatte 11 zumindest bereichsweise einfasst, um einen manuellen Zugriff auf den umfangsseitigen Schneidbereich des Sägeblatts 31 zu verhindern.

Die obere Haube 28 kann insbesondere auch einen Spanführungskanal bilden. Über diesen können Späne, welche während des Schneideingriffs mit dem Werkstück 80 abgetragen werden, zu einem Absauganschluss 22 hin abgeleitet werden. An dem Absauganschluss 22 kann in üblicher Weise eine Saugeinrichtung zur Abfuhr oder ein Auffangbehälter zum Auffangen der Späne angebracht werden.

Die Antriebsbaugruppe weist auch in bekannter Weise einen Griff 23 auf, an dem die Bearbeitungsmaschine 10 sicher gehalten und in Arbeitsrichtung AR vorgeschoben werden kann.

Um das Sägeblatt 31 auch in dem Bereich unterhalb der Auflageseite 12 zugriffsicher abzudecken, ist eine Schutzabdeckung 24 vorgesehen, die als Pendelhaube ausgebildet sein kann. Diese Schutzabdeckung 24 überdeckt zumindest teilweise den unteren Umfangsbereich des Sägeblatts 31, welcher nicht von der oberen Haube 28 geschützt ist.

Die Schutzabdeckung 24 besitzt in Arbeitsrichtung AR vorne einen Anschlag 25, an dem die Schutzabdeckung 24 entgegengesetzt zur Arbeitsrichtung AR verschwenkt werden kann. Wenn die Schutzabdeckung 24 mit ihrem Anschlag 25 auf eine Stirnseite 81 eines Werkstücks 80 auftrifft, so öffnet sich die Schutzabdeckung 24 in bekannter Weise selbsttätig und kontinuierlich, wenn die Bearbeitungsmaschine 10 in Arbeitsrichtung AR vorgeschoben wird. Ebenso kann die Schutzabdeckung 24 mittels eines Hebelelements 24.2 manuell geöffnet werden, beispielsweise um eine bessere Sicht auf die an der Stirnseite 81 des Werkstücks 80 angezeichnete Markierung zu ermöglichen.

Figur 1 veranschaulicht in schematischer Weise, dass die Arbeitsbaugruppe 20 mittels eines Gehrungslagers 26 schwenkbar mit der Führungsplatte 11 mittelbar oder unmittelbar verbunden sein kann. Dabei verläuft die von dem Gehrungslager 26 gebildete Schwenkachse in Arbeitsrichtung AR. Entsprechend kann mit einer Verschwenkung der Antriebsbaugruppe 20 um die Schwenkachse des Gehrungslagers 26 die Neigung des Sägeblatts 31 eingestellt werden, um Gehrungsschnitte zu erzeugen.

Es ist auch denkbar, dass die Arbeitsbaugruppe 20 um eine horizontale Tauchachse, welche senkrecht zu der Arbeitsrichtung AR steht, schwenkbar mit der Führungsplatte 11 verbunden ist. Dann kann zusätzlich auch ein Tauchschnitt mit der Handkreissäge durchgeführt werden oder die Schnitttiefe des Sägeblatts eingestellt werden.

Zu diesem Zweck weist die Handkreissäge eine Arretierung 29 auf, mit der die Antriebsbaugruppe 20 gegenüber der Führungsplatte 11 positionierbar ist, derart, dass das Schneidwerkzeug 30 in zumindest einer arretierten Schneidposition, in der das Schneidwerkzeug zumindest teilweise über die Auflageseite 12 unterseitig vorsteht, fest eingestellt werden kann.

Figur 1 veranschaulicht, dass mit dem Sägeblatt 31 ein Schnitt in die Stirnseite 81 des Werkstücks 80 eingebracht werden kann. Für eine exakte Einstellung eines Schnittwinkels quer zur Arbeitsrichtung sieht die Erfindung die Verwendung einer Beleuchtungsanordnung 40 vor. Die Beleuchtungsanordnung 40 kann ein Leuchtmittel aufweisen, welches auch ein oder mehrere Leuchtelemente aufweisen kann.

Als Leuchtelemente kommen beispielsweise LEDs zum Einsatz. Denkbar ist es, dass dem Leuchtelement bzw. dem Leuchtmittel eine Linse zugeordnet ist, mit der sich das von dem Leuchtmittel emittierte Licht optisch beeinflussen, insbesondere fokussieren, lässt.

Die Beleuchtungsanordnung 40 ist an die zentrale Stromversorgung der Bearbeitungsmaschine 10 angeschlossen.

Vorzugsweise kann es so sein, dass bei Betätigung des Hauptschalters, der zum Aktivieren des Antriebsmotors 21 dient, die Beleuchtungsanordnung 40 aktiviert wird.

Beispielsweise kann es so sein, dass der Hauptschalter in einer ersten Position zunächst nur die Beleuchtungsanordnung 40 aktiviert. In einer weiteren Positionierung kann dann der Antriebsmotor 21 eingeschaltet werden.

Die Beleuchtungsanordnung 40 kann vorzugsweise in Arbeitsrichtung AR hinter der Drehachse des Sägeblatts 31, vorzugsweise in Arbeitsrichtung AR hinter der Umfangsbegrenzung des Sägeblatts 31 angeordnet und positioniert sein.

Vorzugsweise ist es so, dass die Beleuchtungsanordnung 40 an dem Bereich der Bearbeitungsmaschine 10 angebracht ist, der mit der Antriebsbaugruppe 20 um die Schwenkachse des Gehrungslagers 26 verschwenkt wird.

Die Beleuchtungsanordnung 40 ist so angeordnet, dass das von ihr emittierte Licht entlang einer oder entlang beider Seiten des Sägeblatts 31 in Form eines Lichtkegels 41 in Arbeitsrichtung AR emittiert wird, wenn sich das Sägeblatt 31 in seiner arretierten Schnittposition befindet. Dies ist in Figur 1 deutlich gezeigt. Hier ist das Sägeblatt 31 fest einstellbar der Führungsplatte 11 zugeordnet, sodass es sowohl um die Schwenkachse des Gehrungslagers 26, als auch um die - nicht dargestellte - Tauchlagerachse, gegenüber der Führungsplatte 11 festgelegt werden kann. In dieser arretierten Schnittposition steht das Sägeblatt 31 bereit, um in die Stirnseite 81 des Werkstücks 80 einzuschneiden.

In der arretierten Schnittposition steht das Sägeblatt 31 im Lichtweg der Beleuchtungsanordnung 40. Damit erzeugt das Sägeblatt auf der Stirnseite 81 des Werkstücks 80 einen Schlagschatten 70. In Figur 1 erstreckt sich der Schlagschatten 70 auf der Stirnseite 81 des Werkstücks 80 von einem Punkt S zu einem Endpunkt P. Der Punkt S wird von einem oberen, den Lichtkegel 41 in der Schnittebene nach oben begrenzenden Lichtstrahl 42 definiert. Der Endpunkt P wird von einem unteren, den Lichtkegel 41 in der Schnittebene nach unten begrenzenden Lichtstrahl 43 begrenzt.

Vorteilhafterweise liegt der Punkt S auf der von der Stirnseite 81 und der Oberseite 82 des Werkstücks 80 gebildeten Werkstückkante. Anders formuliert liegt der Punkt S im Schnitt der Ebene der Auflageseite 12 mit einer Ebene senkrecht quer dazu und tangential zur Vorderkante des Anschlags 25, wenn die Schutzabdeckung 24 sich in einer geschlossenen Stellung oder der Schutzstellung befindet.

Der Endpunkt P liegt in der Schnittebene unterhalb oder entfernt von Punkt S.

Figur 1 veranschaulicht die Schnittstelle 32, mit der das Sägeblatt 31 bestimmungsgemäß zuerst in das Werkstück 80 stirnseitig eindringt, wenn es in Arbeitsrichtung AR vorgeschoben wird. Wenn diese Schnittstelle 32 an der Stirnseite 81 ansteht, so sollte vorteilhafterweise eine Sichtverbindung zwischen der seitlichen Begrenzung der Schnittstelle zu der Beleuchtungsanordnung längs einer oder beider jeweils zugeordneten Seite des Sägeblatts 31 möglich sein. Dies ermöglicht es, dass der Schlagschatten 70 bis an die Auflageseite 12 der Führungsplatte 11 herangeführt ist.

Vorteilhafterweise kann es auch so sein, dass dann, wenn der Anschlag 25 an der Stirnseite 81 des Werkstücks 80 ansteht, eine geradlinige Sichtverbindung (siehe Lichtstrahl 43) zwischen der Beleuchtungsanordnung 40 und dem Punkt S besteht. Dies gewährleistet, dass in dieser Positionierung der Bearbeitungsmaschine 10 der Schlagschatten 70 des Sägeblatts 31 unbeeinflusst von dem Befestigungsmittel 27 oder eines etwaigen Anlageflansches auf der Rückseite des Sägeblatts 31 bis an die Auflageseite 12 oder zumindest nahe an die Auflageseite 12 herangeführt werden kann.

Der den Lichtkegel 41 begrenzende untere Lichtstrahl 42 kann bis zu einem Endpunkt P auf der Stirnseite 81 des Werkstücks 80 geführt werden. Weist das Werkstück 80 eine geringere Höhe auf, so ist es auch denkbar, dass kein Endpunkt P auf der Stirnseite 81 von dem unteren Lichtstrahl 42 gebildet, aber dennoch ein durchgängiger Schlagschatten 70 erzeugt wird.

Figur 1 veranschaulicht weiter, dass dieselben Effekte oder annähernd dieselben Effekte wie mit der Beleuchtungsanordnung 40 auch mit der Beleuchtungsanordnung 40' erzielt werden können. Die Beleuchtungsanordnung 40' ist in ähnlicher Weise aufgebaut wie die Beleuchtungsanordnung 40, sodass auf die obigen Ausführungen Bezug genommen werden kann.

Die Beleuchtungsanordnung 40' ist dem Umfangsrand des Sägeblatts 31 so zugeordnet, dass der Lichtkegel 41', welcher von der Beleuchtungsanordnung 40' emittiert wird, zu einer oder zu beiden Seiten des Sägeblatts 31 geleitet wird, um einen Schlagschatten 70 des Sägeblatts 31 auf der Stirnseite 81 des Werkstücks 80 zu erzeugen.

Dabei soll es so sein, dass der Lichtkegel 41' in der arretierten Schneidposition des Sägeblatts 31 in Arbeitsrichtung AR emittiert wird, wie Figur 1 erkennen lässt. Zu diesem Zweck ist die Beleuchtungsanordnung 40' vorzugsweise hinter der Drehachse des Sägeblatts 31 angeordnet.

Der untere Lichtstrahl 42' des Lichtkegels 41' wird, insbesondere oberhalb, an dem Befestigungselement 27 vorbei über das Sägeblatt 31 geführt, um den Endpunkt P' des Schlagschattens 70 auf der Stirnseite 81 des Werkstücks 80 zu bilden. Wieder ist es so, dass, wenn das Werkstück 80 dünn ausgebildet ist, nicht zwangsläufig ein Endpunkt P' entstehen muss. Der obere Lichtstrahl 43' des Lichtkegels 41' kann wieder zu der Stirnseite 81 derart geführt werden, dass sich der Punkt S ergibt. Der Schlagschatten 70 erstreckt sich dann im Bereich zwischen den Punkten S und P'.

Wenn die Beleuchtungsanordnung 40' wieder so ausgebildet ist, dass sich Lichtkegel 41' zu beiden Seiten des Sägeblatts 31 erstrecken, dann ergibt sich wieder ein linienförmiger Schlagschatten 70 auf der Stirnseite 81, der bis an die Auflageseite 12 oder nahe bis zur Auflageseite 12 geführt ist.

Figur 1 lässt erkennen, dass eine weitere Beleuchtungsanordnung 50 vorgesehen sein kann, die als Schnittverlauf-Anzeiger dient. Mittels des Schnittverlauf-Anzeigers soll eine Projektion eines Schlagschattens (Schnittverlaufschatten 71) des Sägeblatts 31 auf der Oberseite 82 des Werkstücks 80 erzeugt werden. Wie Figur 1 zeigt, kann zu diesem Zweck die weitere Beleuchtungsanordnung 50 beispielsweise im Bereich hinter der Drehachse des Sägeblatts 31 und auf der der Führungsplatte 11 abgewandten Seite oberhalb der Drehachse an der Antriebsbaugruppe 20 vorhanden sein.

Die weitere Beleuchtungsanordnung 50 erzeugt einen Lichtkegel 51, der von den beiden Lichtstrahlen 52, 53 in der Zeichnungsebene gemäß Figur 1 begrenzt ist. Der Schlagschatten des Sägeblatts 31, welcher mit der weiteren Beleuchtungsanordnung 50 erzeugt wird, erstreckt sich zwischen den beiden Endpunkten A und B, wobei Endpunkt B in einem Bereich der Oberseite 82 des Werkstücks 80 in Arbeitsrichtung AR vor der Bearbeitungsmaschine 10 liegt. Wie die Darstellung veranschaulicht, kann es insbesondere auch so sein, dass ein Teil des Schlagschattens verwendet wird, um einen Schlagschatten zwischen den Punkten A und S auf der Stirnseite 81 des Werkstücks 80 zu erzeugen. Endpunkt A liegt somit in einem Bereich der Stirnseite 81 des Werkstücks 80 unterseitig der Auflageseite 12 der Führungsplatte 11.

Mithin kann es im Rahmen der Erfindung auch vorgesehen sein, dass sich mit einer einzigen Beleuchtungsanordnung 50 sowohl ein Schlagschatten 70 auf der Stirnseite 81 als auch ein Schnittverlaufschatten 71 auf der Oberseite 82 des Werkstücks 80 erzeugen lässt.

Alle Beleuchtungsanordnungen 40, 40', 50 haben gemeinsam, dass die jeweiligen Leuchtelemente der Beleuchtungsanordnungen 40, 40', 50 in der gleichen Ebene wie das Schneidwerkzeug 30 oder der Schnittebene angeordnet sind.

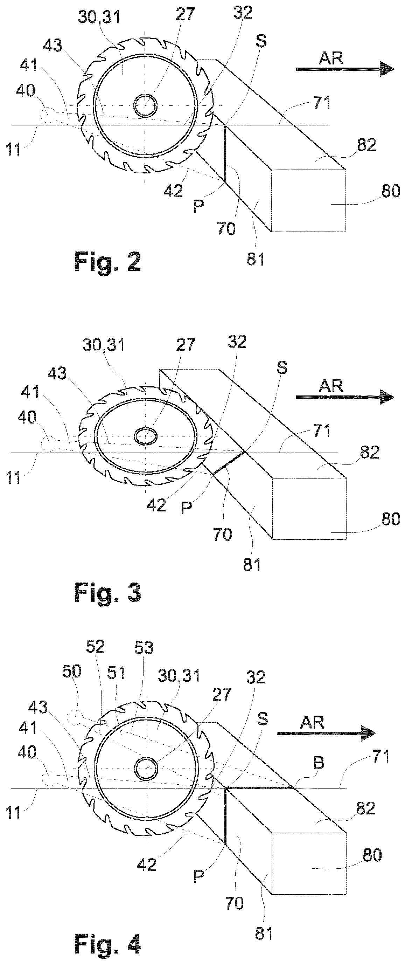

In den Figuren 2-4 sind exemplarisch verschiedene Arbeitssituationen der Bearbeitungsmaschine 10 gemäß Figur 1 dargestellt. Wie Figur 2 veranschaulicht, ist die Antriebsbaugruppe 20 in ihrer Grundpositionen derart in einer Schnittposition arretiert, dass das Sägeblatt 31 senkrecht zu der Auflageseite 12 steht. Entsprechend kann mit der Beleuchtungsanordnung 40 ein linienförmiger Schlagschatten 70 auf die Stirnseite 81 des Werkstücks 80 projiziert werden, der sich ebenfalls senkrecht zu der Auflageseite 12 erstreckt.

Gemäß Figur 3 ist die Antriebsbaugruppe 20 in einer Schneidposition arretiert, bei der sich das Sägeblatt 31 mit seiner Sägeblattebene in einem Winkel abweichend von 90° zu der Auflageseite 12 erstreckt. Somit kann mit dem Sägeblatt 31 ein Gehrungsschnitt in die Stirnseite 81 des Werkstücks 80 eingebracht werden. In der in Figur 3 gezeigten Schnittposition kann mit der Beleuchtungseinrichtung 40 entsprechend der Ausrichtung des Sägeblatts 31 ein schräg verlaufender Schlagschatten 70 des Sägeblatts 31 auf die Stirnseite 81 des Werkstücks 80 projiziert werden.

Figur 4 veranschaulicht die Ausrichtung des Sägeblatts 31 gemäß Figur 2, also senkrecht zu der Auflageseite 12. Ebenso wie in Figur 2 wird mittels der Beleuchtungsanordnung 40 ein Schlagschatten 70 auf die Stirnseite 81 des Werkstücks 80 projiziert. Zusätzlich kommt hier die weitere Beleuchtungsanordnung 50 zum Einsatz. Mit dieser weiteren Beleuchtungsanordnung 50 kann auf der Oberseite 82 des Werkstücks 80 ein Schnittverlaufschatten 71 des Sägeblatts 31 für eine verbesserte Ausrichtung der Bearbeitungsmaschine 10 gegenüber dem Werkstück 80 erreicht werden.

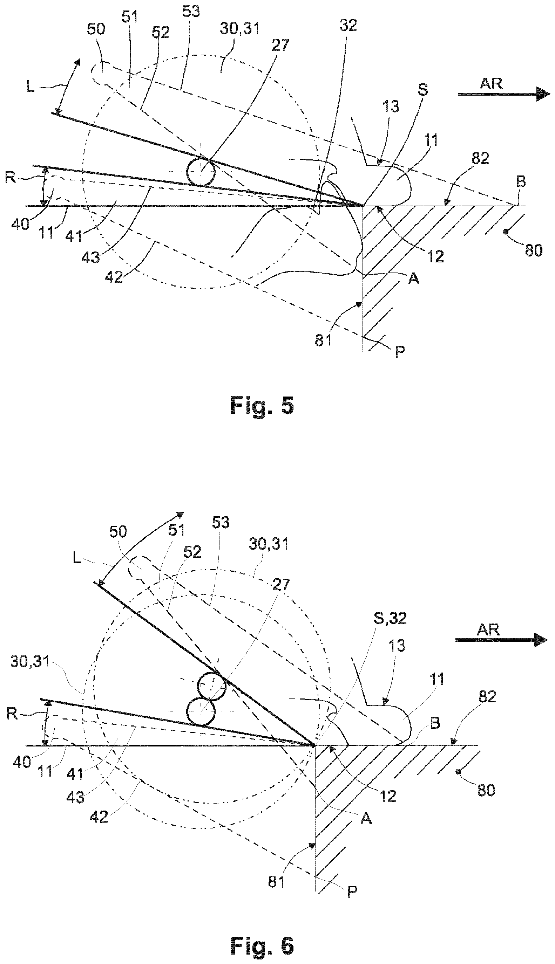

Figuren 5 und 6 veranschaulichen Winkelbereiche R und L für Positionierungsmöglichkeiten der Beleuchtungsanordnung 40 und der weiteren Beleuchtungsanordnung 50 für unterschiedliche arretierte Schnittpositionen. Innerhalb der Winkelbereiche R und L lassen sich die Beleuchtungsanordnung 40 und die weitere Beleuchtungsanordnung 50 positionieren, um die bestimmungsgemäßen linienförmigen Schatten des Sägeblatts 31 zu erzeugen, ohne dass der Schatten des Befestigungselements 27 und/oder des rückseitig angeordneten Anlageflanschs, auf dem das Sägeblatt 31 abgestützt ist, an der Stirnseite 81 und/oder auf der Oberseite 82 des Werkstücks 80 abgebildet wird.

In Figur 5 sind dabei die Möglichkeiten der Positionierung der Beleuchtungsanordnungen 40 und 50 für die arretierte Schnittposition mit maximaler Schnitttiefe innerhalb der Winkelbereiche R und L bei geschlossener Schutzabdeckung 24 angegeben.

Der bevorzugte Winkelbereich R ergibt sich als der Bereich zwischen einer tangentialen Verbindungslinie an die Unterseite des Befestigungselements 27 und/oder die Unterseite des rückseitig angeordneten Anlageflansches, an dem das Sägeblatt 31 abgestützt ist, wenn das Sägeblatt 31 sich in der arretierten Schnittposition mit der maximalen Schnitttiefe befindet, und dem Punkt S sowie der Auflageseite 12. Somit verläuft der von der Beleuchtungsanordnung 40 emittierte Lichtkegel 41, insbesondere der Lichtstrahl 42, in allen arretierten Schnittpositionen der Bearbeitungsmaschine 10 unterhalb des Befestigungselements 27 und/oder unterhalb des rückseitig angeordneten Anlageflansches. Der Winkelbereich R ist vorzugsweise relativ zur bzw. ortsfest bezüglich der Führungsplatte 11.

Figur 6 veranschaulicht die Möglichkeiten der Positionierung der Beleuchtungsanordnungen 40 und 50 bei geöffneter Schutzabdeckung 24, dann wenn die Schnittstelle 32 bis an das Werkstück 80 zu Projektionszwecken herangeführt ist, einmal für die arretierte Schnittposition mit maximaler Schnitttiefe und einmal für eine arretierte Schnittposition mit reduzierter Schnitttiefe.

Figur 6 verdeutlicht, dass der Winkelbereich R bei geöffneter Schutzabdeckung 24 und/oder reduzierter Schnitttiefe des Sägeblatts 31 größer ist als bei geschlossener Schutzhaube 24, und somit nicht maßgeblich hinsichtlich der Positionierung der Beleuchtungsanordnungen 40.

Der Winkelbereich L ergibt sich als der Bereich zwischen einer tangentialen Verbindungslinie an die Oberseite des Befestigungselements 27 und/oder an die Oberseite des rückseitig angeordneten Anlageflansches, an dem das Sägeblatt 31 abgestützt ist, und der Schnittstelle 32. Der Winkelbereich L ist vorzugsweise relativ zur bzw. ortsfest bezüglich der oberen Haube 28. Somit ist die Anordnung der weiteren Beleuchtungsanordnung 50 unabhängig von der Schnittposition.

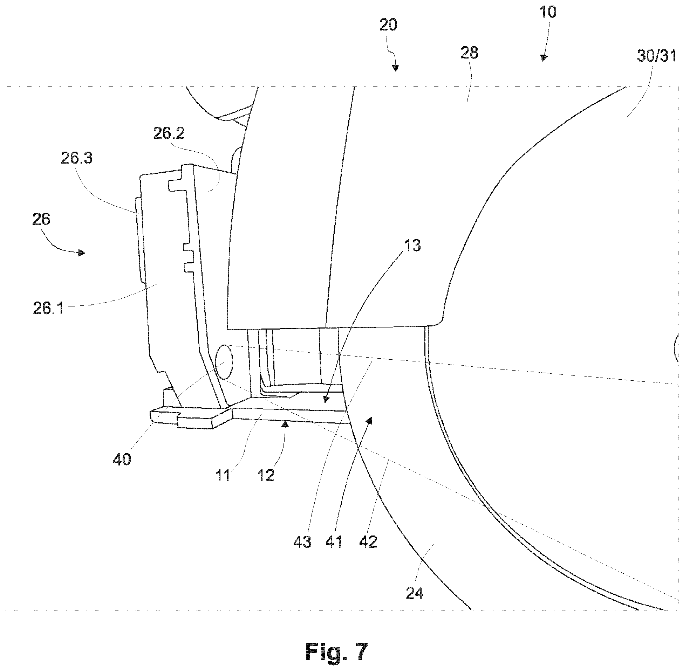

In Figur 7 ist eine mögliche Anordnung der Beleuchtungsanordnung 40 gezeigt. Wie diese Darstellung veranschaulicht, ist die Beleuchtungsanordnung 40 an dem, insbesondere hinteren, Gehrungslager 26 angeordnet. Das Gehrungslager 26 besitzt ein Lagerstück 26.1, welches ortsfest mit der Führungsplatte 11 verbunden ist. Mit dem Lagerstück 26.1 ist ein Schwenkstück 26.2 schwenkbar gekoppelt, wobei das Schwenkstück 26.2 um die Schwenkachse des Gehrungslagers 26 verschwenkbar ist. An dem Schwenkstück 26.2 ist die Antriebsbaugruppe 20 befestigt. Dementsprechend kann die Antriebsbaugruppe 20 um die Schwenkachse des Gehrungslagers 26 verschwenkt werden.

Die Beleuchtungsanordnung 40 ist an dem Schwenkstück 26.2 befestigt, sodass es mit einer Verschwenkung der Antriebsbaugruppe 20 geschwenkt wird. Damit folgt die Beleuchtungsanordnung 40 der Schwenkbewegung des Sägeblatts 31.

Figur 7 verdeutlicht, dass die Beleuchtungsanordnung 40 in Arbeitsrichtung AR hinter der oberen Haube 28, insbesondere hinter einem das Sägeblatt 31 einfassenden Teil der oberen Haube 28, angeordnet ist. Ein das Sägeblatt 31 einfassender Teil der oberen Haube 28 endet somit in Arbeitsrichtung AR vor Beleuchtungsanordnung 40. Somit ist die Beleuchtungseinrichtung 40 besonders gut vor Verschmutzung geschützt.

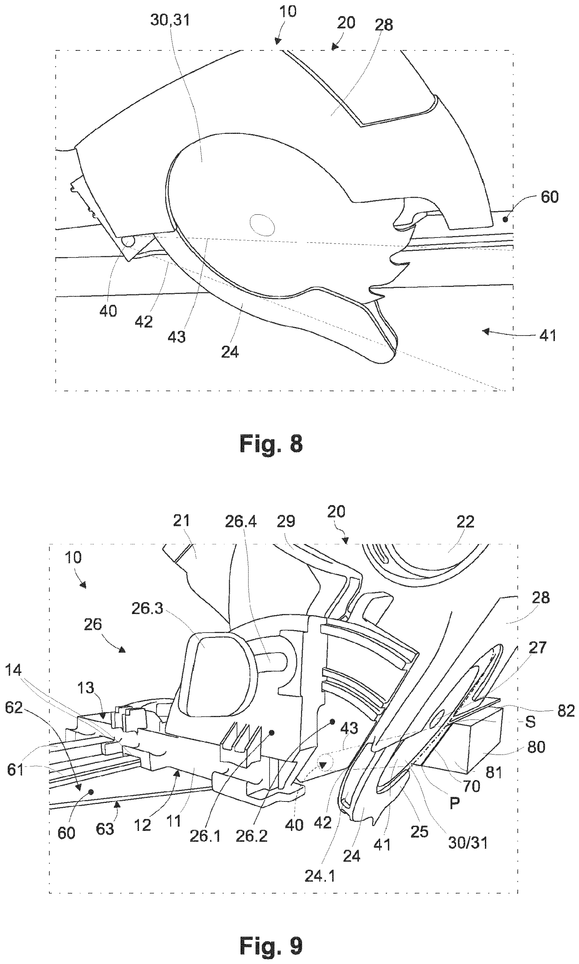

Figuren 7 und 8 veranschaulichen weiter, dass die Beleuchtungsanordnung 40 unterhalb der oberen Haube 28 angeordnet ist, insbesondere, wenn das Sägeblatt 31 in der Schnittposition mit maximaler Schnitttiefe arretiert ist. Somit wird der von der Beleuchtungsanordnung 40 emittierte Lichtkegel 41 unter der unteren Begrenzung der oberen Haube 28 in Arbeitsrichtung AR hindurch geleitet. Anders ausgedrückt ist die Beleuchtungsanordnung 40 so mit dem schwenkbaren Teil der Antriebsbaugruppe 20 verbunden, dass die Beleuchtungsanordnung 40 zusammen mit der Antriebsbaugruppe 20 um das Gehrungslager 26 verschwenkt werden kann. Bevorzugterweise kann das Sägeblatt 31 und/oder die obere Haube 28 relativ zur Beleuchtungsanordnung 40, beispielsweise um eine gegebenenfalls vorhandene Tauchlagerachse, verstellt werden.

Figur 9 veranschaulicht, dass zur Einstellung der arretierten Schnittposition, insbesondere einer Schwenkposition, das Schwenkstück 26.2 mit dem Lagerstück 26.1 geklemmt werden kann. Hierzu ist ein Feststeller 26.3 verwendet, der beispielsweise in Form einer Schraube durch einen Schlitz 26.4 im Lagerstück 26.1 geführt ist. Diese Schraube kann in eine Gewindeaufnahme des Schwenkstücks 26.2 eingeschraubt werden. Sobald die gewünschte Schnittposition eingestellt ist, kann der Feststeller 26.3 verdreht und die Schwenkposition fixiert werden.

Zur Einstellung der arretierten Schnittposition, insbesondere der Schnitttiefe, kann das Sägeblatt 31 mittels der Arretierung 29 relativ zur Führungsplatte 11 positioniert und arretiert werden.

Figur 7 veranschaulicht weiter, dass das Licht bzw. der Lichtkegel 41 der Beleuchtungsanordnung 40 durch die Schutzabdeckung 24 hindurch geleitet ist.

Figur 9 veranschaulicht, dass die Schutzabdeckung 24 zu diesem Zweck einen Durchbruch 24.1 aufweist der den Lichtweg freigibt, sodass der Lichtkegel 41 zumindest teilweise auf einer oder auf beiden Seiten des Sägeblatts 31 vorbeigeleitet werden kann, um den Schlagschatten 70 auf der Stirnseite 81 des Werkstücks 80 zu erzeugen.

Figur 8 veranschaulicht, dass sich der Durchbruch 24.1 in der Schutzabdeckung 24 in Umfangsrichtung des Sägeblatts 31 zumindest soweit erstreckt, dass bei geöffneter oder teilgeöffnete Schutzabdeckung 24 der Lichtkegel 41 durch die Schutzabdeckung 24 hindurchgeführt werden kann.

Figuren 8 und 9 zeigen eine Anwendungsform der Bearbeitungsmaschine 10 gemäß den Figuren 1-7. Wie diese Darstellungen veranschaulichen, kann die Bearbeitungsmaschine 10 in Kombination mit einer Führungsschiene 60 eingesetzt werden. Die Führungsschiene 60 dient dazu, einen geradlinig, in Arbeitsrichtung AR, geführten Schnitt in das Werkstück 80 einzubringen.

Die Führungsschiene 60 besitzt eine obere Auflagefläche 62, die der Auflageseite 12 zugewandt ist, und auf die die Auflageseite 12 aufgesetzt ist. Die Auflageseite 12 ist mit Führungsaufnahmen 14 versehen, die mit Führungen 61 der Führungsschiene 60 zusammenarbeiten, um eine Längsführung zu bilden. Die Längsführung erstreckt sich dabei in Arbeitsrichtung AR.

Im vorliegenden Ausführungsbeispiel sind die Führungen 61 als nach oben stehende Rippen ausgebildet, die in die als Nuten ausgebildeten Führungsaufnahmen 14 eingreifen. Die Führungsschiene 60 kann mit ihrer Unterseite 63 auf die Oberseite 82 des Werkstücks 80 aufgesetzt und in dieser Positionierung befestigt werden, wenn der Schlagschatten 70 in der gewünschten Positionierung gegenüber dem Werkstück 80 ausgerichtet ist.

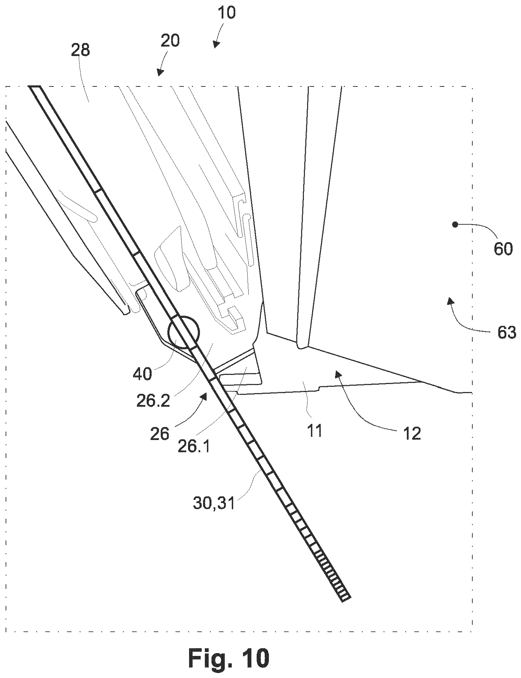

Figur 10 zeigt eine Ansicht auf die Bearbeitungsmaschine 10 gemäß den Figuren 8 und 9 in Ansicht von schräg unten entgegengesetzt zur Arbeitsrichtung AR und bei geöffneter Schutzabdeckung 24. Wie diese Darstellung veranschaulicht, ist die Beleuchtungsanordnung 40 an dem Schwenkstück 26.2 des Gehrungslagers 26 befestigt. Die Beleuchtungsanordnung 40 ist so ausgebildet und angeordnet, dass sich das Licht der Beleuchtungsanordnung 40 an dem Sägeblatt 31 teilt, um die beiden Lichtkegel 41 und 41 zu erzeugen, die sich zu beiden Seiten des Sägeblatts 31 erstrecken.

Diese Darstellung veranschaulicht auch, dass die Anordnung der Beleuchtungsanordnung 40 vorteilhaft so gelöst ist, dass sich im Lichtweg der Lichtkegel 41 nur das Sägeblatt 31 befindet, um den Schlagschatten 70 unbeeinflusst von sonstigen Bauteilen der Bearbeitungsmaschine 10 auf das Werkstück 80, insbesondere auf die Stirnseite 81 des Werkstücks 80, projizieren zu können.

Figur 10 verdeutlicht ebenso, dass die Beleuchtungsanordnung 40 vorteilhafterweise so angeordnet ist, dass diese mittig hinter dem Sägeblatt 31 angeordnet ist.

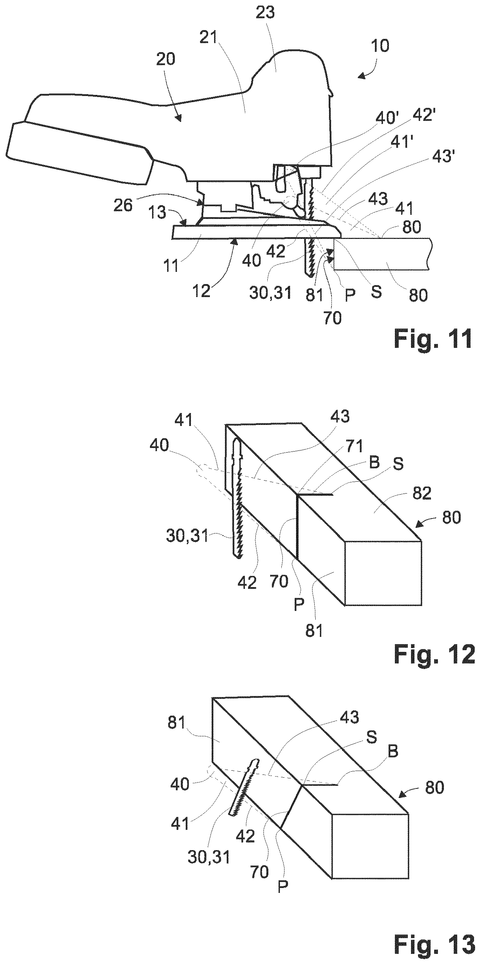

Figur 11 zeigt ein weiteres Ausführungsbeispiel einer handgeführten Bearbeitungsmaschine 10, nämlich eine Stichsäge. Diese Bearbeitungsmaschine 10 weist wieder eine Antriebsbaugruppe 20 mit einem Antriebsmotor 21 auf. Die Antriebsbaugruppe 20 ist über ein Gehrungslager 26 schwenkbar mit einer Führungsplatte 11 verbunden, wobei sich die Antriebsbaugruppe 20 im Bereich oberhalb der Oberseite 13 der Führungsplatte 11 befindet. In der in Figur 11 gezeigten arretierten Schnittposition steht das Schneidwerkzeug 30, nämlich das Sägeblatt 31, über die Unterseite 12 der Führungsplatte 11 mit maximaler Schnitttiefe vor.

Im Bereich der Antriebsbaugruppe 20 ist ähnlich wie bei den vorbeschriebenen Ausführungsbeispielen eine Beleuchtungsanordnung 40 angeordnet, die Licht emittiert, derart dass das Licht zu einer oder zu beiden Seiten des Sägeblatts 31 einen Lichtkegel 41 erzeugt, um einen Schlagschatten 70 auf der Stirnseite 81 eines Werkstücks 80 zu erzeugen. Ähnlich wie bei den vorhergehenden Ausführungsbeispielen weist zu diesem Zweck die Führungsplatte 11 einen Durchbruch auf, durch den der bzw. die Lichtkegel 41 hindurchgeführt werden können, um den Schlagschatten 70 des Sägeblatts 31 auf das Werkstück 80 projizieren zu können.

Die Figur 12 veranschaulicht die Projektion des Schlagschattens deutlicher. Dabei ist von der Bearbeitungsmaschine 10 lediglich das Sägeblatt 31 dargestellt. Wie diese Darstellung veranschaulicht, erstreckt sich der Lichtkegel 41 der Beleuchtungsanordnung 40 so, dass auf der Stirnseite 81 der Schlagschatten 70 und gleichzeitig auf der Oberseite 82 des Werkstücks 80 der Schnittverlaufschatten 71 des Sägeblatts 31 projiziert werden.

Figur 13 veranschaulicht eine Arbeitssituation, bei der die Antriebsbaugruppe 20 um die Schwenkachse des Gehrungslagers 26 gegenüber der Führungsplatte 11 verschwenkt wurde, um einen Gehrungsschnitt im Werkstück 80 erzeugen zu können. Wie diese Darstellung veranschaulicht, kann auch in dieser Positionierung ein Schlagschatten 70 und/oder ein Schnittverlaufschatten 71 auf dem Werkstück 80 projiziert werden.

In Figur 11 ist auch eine zusätzliche oder alternative Positionierung der Beleuchtungsanordnung 40 dargestellt. Dabei ist die Beleuchtungsanordnung 40' ein Stück weit höher positioniert als die Beleuchtungsanordnung 40, um den gewünschten Schattenwurf zu erreichen.

## Patentansprüche

1. Handgeführte Bearbeitungsmaschine (10), insbesondere Handkreissäge oder Stichsäge, mit einer Führungsplatte (11), die eine Auflageseite (12) zur mittelbaren oder unmittelbaren Auflage auf einem zu bearbeitenden Werkstück (80) aufweist und gegenüberliegend der Auflageseite (12) eine Oberseite (13) aufweist, wobei im Bereich oberhalb der Oberseite (13) eine Antriebsbaugruppe (20) mit einem Antriebsmotor (21) gehalten ist, mittels dem ein Schneidwerkzeug (30) antreibbar ist, wobei dem Schneidwerkzeug (30) eine Beleuchtungsanordnung (40, 40') zugeordnet ist, die einen Lichtkegel (41, 41') in Arbeitsrichtung (AR) der Bearbeitungsmaschine (10), auf das Schneidwerkzeug (30) emittiert,
**dadurch gekennzeichnet,**
**dass** das Schneidwerkzeug (30) in einer arretierten Schneidposition, in der die Antriebsbaugruppe (20) gegenüber der Führungsplatte (11) ortsfest positioniert, insbesondere verriegelt, ist, über die Auflageseite (12) unterseitig vorsteht, und
**dass** das Schneidwerkzeug (30) in der arretierten Schneidposition im Lichtweg des Lichtkegels (41, 41') angeordnet ist, um einen Schlagschatten (70) des Schneidwerkzeugs (30) auf einer dem Schneidwerkzeug (30) zugewandten, quer zur Auflageseite (12) der Führungsplatte (11) ausgerichteten Stirnseite (81) eines zu bearbeitenden Werkstücks (80) zu erzeugen.

2. Handgeführte Bearbeitungsmaschine (10) nach Anspruch 1, **dadurch gekennzeichnet, dass** das Schneidwerkzeug (30) in der arretierten Schneidposition durch eine von der Auflageseite (12) gebildete Auflageebene hindurchgeführt ist, wobei die in Arbeitsrichtung (AR) vordere Schneidkante des Schneidwerkzeugs (30) die Auflageebene an einer Schnittstelle (32) schneidet, und dass zwischen der Schnittstelle (32) und der Beleuchtungseinrichtung (40, 40') in der arretierten Schneidposition eine geradlinige Sichtverbindung gebildet ist.

3. Handgeführte Bearbeitungsmaschine (10) nach Anspruch 1 oder 2, **dadurch gekennzeichnet, dass** sich der Lichtkegel (41, 41') in der arretierten Schneidposition zu beiden, Seiten des in Arbeitsrichtung (AR) orientierten Schneidwerkzeugs (30) erstreckt.

4. Handgeführte Bearbeitungsmaschine (10) nach Anspruch 2 oder 3, **dadurch gekennzeichnet, dass** sich die geradlinige Sichtverbindung über die in Arbeitsrichtung (AR) verlaufende Seite des Sägeblatts (31), erstreckt oder dass sich jeweils eine Sichtverbindung über die beiden in Arbeitsrichtung (AR) verlaufenden Seiten des Sägeblatts (31) erstreckt.

5. Handgeführte Bearbeitungsmaschine (10) nach einem der Ansprüche 1 bis 4, **dadurch gekennzeichnet, dass** die Führungsplatte (11) einen Durchbruch aufweist, durch den zumindest ein Teil des Lichtkegels (41) von der Oberseite (13) zur Auflageseite (12) der Führungsplatte (11) geleitet ist, und dass der Lichtkegel (41, 41') so in den Bereich unterhalb der Auflageseite (12) geführt ist, dass der Schlagschatten (70) des Schneidwerkzeugs (30) in der arretierten Schneidposition bis hin zu der Auflageseite (12) geführt ist oder dass der Abstand des Schlagschattens (70) von der Auflageseite (12) maximal 20% der maximalen Schnitttiefe, vorzugsweise maximal 10% der maximalen Schnitttiefe, der Bearbeitungsmaschine (10) beträgt.

6. Handgeführte Bearbeitungsmaschine (10) nach einem der Ansprüche 1 bis 5, **dadurch gekennzeichnet, dass** das Schneidwerkzeug (30) in der arretierten Schneidposition im Lichtweg des Lichtkegels (41, 41') angeordnet ist, um einen in Arbeitsrichtung (AR) verlaufenden Schnittverlaufschatten (71) des Schneidwerkzeugs (30) auf eine in Arbeitsrichtung (AR) verlaufende Oberseite (82) des Werkstücks (80) zu projizieren.

7. Handgeführte Bearbeitungsmaschine (10) nach einem der Ansprüche 1 bis 6, **dadurch gekennzeichnet, dass** eine weitere Beleuchtungsanordnung (50) im Bereich oberhalb der Oberseite (13) angeordnet ist, und dass die weitere Beleuchtungsanordnung (50) ausgebildet und angeordnet ist, um einen Schnittverlaufschatten (71) des Schneidwerkzeugs (30) auf eine in Arbeitsrichtung (AR) verlaufende Oberseite (82) des Werkstücks (80) zu projizieren.

8. Handgeführte Bearbeitungsmaschine (10) nach einem der Ansprüche 1 bis 7, **dadurch gekennzeichnet, dass** das Schneidwerkzeug (30) das Sägeblatt (31) einer Handkreissäge ist, das mittels eines Befestigungselements (27), insbesondere mittels eines Befestigungsflansches zentrisch mit der Antriebsbaugruppe (20) verbunden ist, und dass in der arretierten Schneidposition ein von der Beleuchtungsanordnung (40) emittierter Lichtstrahl (42), der in einer Ausrichtungsstellung der Bearbeitungsmaschine (10), in der die Auflageseite (12) senkrecht zur Stirnseite (81) des Werkstücks (80) ausgerichtet ist, auf eine der Auflageseite (12) zugewandten Oberkante der Stirnseite (81) trifft, unterhalb des Befestigungselements (27) verläuft.

9. Handgeführte Bearbeitungsmaschine (10) nach einem der Ansprüche 1 bis 8, **dadurch gekennzeichnet, dass** die arretierte Schneidposition die Einstellposition ist, bei der das Schneidwerkzeug (30) mit seiner maximalen Schnitttiefe über die Auflageseite (12) der Führungsplatte (11) vorsteht.

10. Handgeführte Bearbeitungsmaschine (10) nach einem der Ansprüche 1 bis 9, **dadurch gekennzeichnet, dass** die Antriebsbaugruppe (20) mittels eines Gehrungslagers (26) schwenkbar mit der Führungsplatte (11) verbunden ist, dass das Gehrungslager (26) ein Lagerstück (26.1) und damit schwenkbar verbunden ein Schwenkstück (26.2) aufweist, dass das Lagerstück (26.1) an der Führungsplatte (11) und das Schwenkstück (26.2) an der Antriebsbaugruppe (20) angekoppelt ist, und dass die Beleuchtungsanordnung (40, 40') an dem Schwenkstück (26.2) mittelbar oder unmittelbar befestigt ist.

11. Handgeführte Bearbeitungsmaschine (10) nach einem der Ansprüche 1 bis 10, **dadurch gekennzeichnet, dass** dem als Sägeblatt (31) einer Kreissäge ausgebildeten Schneidwerkzeug (30) eine, zwischen einer Schutzstellung und einer Freigabestellung verstellbare Schutzabdeckung (24) zugeordnet ist, die in der Schutzstellung das Sägeblatt (31) im Bereich der Auflageseite (12) zumindest teilweise abdeckt und dass die Schutzabdeckung (24) einen Durchbruch (24.1) aufweist, durch den der Lichtkegel (41) der Beleuchtungsanordnung (40, 40') in der Schutzstellung zumindest teilweise hindurchgeführt ist.

12. Handgeführte Bearbeitungsmaschine (10) nach einem der Ansprüche 1 bis 11, **dadurch gekennzeichnet, dass** im Bereich der Auflageseite (12) der Führungsplatte (11) eine oder mehrere in Arbeitsrichtung (AR) verlaufende Führungsaufnahmen (14) vorgesehen sind, dass die Auflageseite (12) der Führungsplatte (11) auf einer Auflagefläche (62) einer Führungsschiene (60) aufsitzt, wobei Führungen (61) der Führungsschiene (60) mit der oder den Führungsaufnahmen (14) zur Bildung einer Längsführung zusammenarbeiten, dass die Führungsschiene (60) gegenüberliegend der Auflagefläche (62) eine Unterseite (63) aufweist, die zur Auflage auf der Oberseite (82) eines Werkstücks (80) hergerichtet ist, und dass der Lichtkegel (41, 41') zumindest teilweise an der Führungsschiene (60) vorbei oder durch diese hindurch geführt ist, um den Schlagschatten (70) auf dem Werkstück (80), insbesondere auf der Stirnseite (81) des Werkstücks (80), zu erzeugen.

13. Verfahren zur Trennung eines Werkstücks (W) mittels einer handgeführten Bearbeitungsmaschine (10) wobei die handgeführte Bearbeitungsmaschine (10), eine Führungsplatte (11) aufweist, die eine Auflageseite (12) zur mittelbaren oder unmittelbaren Auflage auf dem zu bearbeitenden Werkstück (W) aufweist und gegenüberliegend der Auflageseite (12) eine Oberseite (13) aufweist, wobei im Bereich oberhalb der Oberseite (13) eine Antriebsbaugruppe (20) mit einem Antriebsmotor (21) gehalten ist, mittels derer das Schneidwerkzeug (30) antreibbar ist, wobei dem Schneidwerkzeug (30) eine Beleuchtungsanordnung (40, 40') zugeordnet ist, die einen Lichtkegel (41) in Arbeitsrichtung (AR) der Bearbeitungsmaschine (10), auf das Schneidwerkzeug (30) emittiert,
**dadurch gekennzeichnet,**
**dass** das Schneidwerkzeug (30) in eine arretierte Schneidposition gebracht wird, in der die Antriebsbaugruppe (20) gegenüber der Führungsplatte (11) ortsfest positioniert, insbesondere verriegelt, ist und das Schneidwerkzeug (30) über die Auflageseite (11) unterseitig vorsteht, dass das Schneidwerkzeug (30) in der arretierten Schneidposition im Lichtweg des Lichtkegels (41, 41') angeordnet ist, derart, dass ein Schlagschatten (70) des Schneidwerkzeugs (30) auf einer dem Schneidwerkzeug (30) zugewandten, quer zur Auflageseite (12) der Führungsplatte (11) ausgerichteten Stirnseite (81) des zu bearbeitenden Werkstücks (80) erzeugt wird, und dass dann mit dem Schneidwerkzeug (30) ein Trennschnitt in dem zu bearbeitenden Werkstück (80) vorgenommen wird.

14. Verfahren nach Anspruch 13, **gekennzeichnet durch** einen der Ansprüche 1 bis 11.
